# EUROPEAN PATENT SPECIFICATION

(11) **EP 4 559 628 B1**
(45) Date of publication and mention of the grant of the patent: **05.08.2026**
(21) Application number: 24212071.5
(22) Date of filing: 11.11.2024
(51) Int. Cl.: B25F 5/00, G06F 21/31, G06F 21/81, G06F 21/44

(54) **POWER TOOL SYSTEM AND AUTHORIZATION METHOD**
ELEKTROWERKZEUGSYSTEM UND AUTORISIERUNGSVERFAHREN
SYSTÈME D'OUTIL ÉLECTRIQUE ET PROCÉDÉ D'AUTORISATION

(30) Priority: 21.11.2023 US 202318516228
(43) Date of publication of application: 28.05.2025
(73) Proprietor: Hilti Aktiengesellschaft, 9494 Schaan (LI)
(72) Inventor: Malik, Muhammad Salman, 86159 Augsburg (DE); Lupper, Alfred, 86482 Aystetten (DE)
(74) Representative: Hilti Aktiengesellschaft Corporate Intellectual Property

(56) References cited:
- EP-A1- 3 269 515
- EP-A1- 3 888 517
- DE-A1- 102012 105 483

## Description

### BACKGROUND AND SUMMARY OF THE INVENTION

The present invention relates to a power tool system and an authorization method for a power tool system.

Power tools and their accessories can get lost, misplaced or stolen. This can result in significant losses for workshops or construction companies. Current power tools are mostly cordless power tools and cordless power tool systems comprise power tools, battery packs and chargers. Physical protection by locking devices away is a common solution against theft, however, it is difficult to ensure a proper locking away on construction sites. Therefore, other methods and systems have been developed.

US20170364360A1 describes techniques for providing anti-theft protection for power tools by a power tool which disables itself after a predetermined amount of usage time, and re-enables usage only after secure, software-based authentication of the device.

JP2005342796A describes a rechargeable electric tool and means for transmitting a search signal in a rechargeable electric tool in which a battery pack is detachable from the electric tool body. The electric tool main body and the battery pack is provided with notification means for notifying the user in response to the search signal. Specifically, the battery pack is provided with search signal receiving means that operates using the built-in rechargeable battery as a power source and can notify a user by sound or light.

JP4678199B2 describes an authentication unit that transmits or receives information on tool usage to or from an authentication device worn by the user, and a tool usage confirmation output from the authentication unit or the authentication device that performs the authentication operation. A person who does not wear the proper authentication equipment cannot use the power tool.

US10285003B2 describes a power distribution box including a power input, an AC output, a power-line adapter, and a gateway device. The power-line adapter is coupled to the power input and configured to receive power via the power input and to communicate with an external network. The gateway device is coupled to the power-line adapter and includes a wireless network module and a translation controller. The wireless network module is configured to communicate with power tool devices in a wireless network, and the translation controller is coupled to the power-line adapter and enables communications between the wireless network module and the external network through the power-line adapter.

JP2017126560A describes a power tool system and an adapter for the power tool system to prevent theft of a handheld power tool, its battery and its charger. Each of the handheld power tool and the battery has a passcode. Each passcode is compared, for example, when the battery is attached to the power tool or electrically connected in other ways. When the pass code of the power tool and the battery pack does not match or does not correspond in a predetermined manner, the power tool or the battery the power tool cannot be operated. Also, a battery charger may have a pass code. The battery and charger passcodes are directly compared, for example, when a battery is attached to a charger for charging. When the pass codes of the battery and the charger do not match or do not correspond, charging of the battery is hindered.

US2014339922A1 describes a battery pack which includes an electrical energy store, a data memory and an interface for the alternative connection of the battery pack to a data source or a data sink. The data memory is designed to store data from the data source while the interface is connected to the data source, and to supply the data in the data memory to the data sink while the interface is connected to the data sink.

EP3269515A1, disclosing the preamble of claim 1 and claim 9, describes a power tool system configured to store keys for identification.

It is one object of the present invention to provide an improved method and improved devices enabling improved or facilitated preparation of power tools, their battery packs and chargers for theft prevention measures and/or providing improved or facilitated theft prevention.

A power tool system is provided, comprising: a cordless power tool with a power tool controller and a power tool memory and an exchangeable battery pack for the power tool comprising a battery pack controller and a battery pack memory, a first communication interface for communication with the power tool and a second communication interface for communication with a charger. The charger for the battery pack includes a charger controller and a charger memory and the charger is configured to store in the charger memory a shared key or to store a set parameter and to derive a set key by the charger controller from the set parameter. The battery pack is configured to receive the shared key or the set parameter via the second communication interface from the charger and to store in the battery pack memory the shared key or to store the set parameter and derive the set key by the battery pack controller from the set parameter. The power tool is configured to receive the shared key or the set parameter via the first communication interface from the battery pack and to store in the power tool memory the shared key or to store the set key derived by the power tool controller from the set parameter and/or to store the set parameter and derive the set key by the power tool controller from the set parameter.

The transfer of the shared key, or the set parameter to derive the set key, from the charger via the battery pack to the power tool allows a flexible binding of devices such as power tools, battery packs and chargers of a power tool system to a power tool set. The binding can be done successively by the owner of the devices and in course of the routine operation of the devices, like charging of battery packs and exchange of battery packs on power tools. Additionally, further devices may be added to a set later. The binding can be initiated remotely and can be done without further specific devices for the binding. The set may comprise one or several, potentially different, power tools, one or more battery packs and one or more chargers. The power tools may be, e.g., saws, drivers or wrenches, rotary hammers, or drill and screw drivers. A power tool, a battery pack and a charger may also be part of different power tool sets, by receiving further shared keys or set parameters. The affiliation to a set can be defined by the shared key of the set or the set parameter which is communicated to the power tools of the set via a battery pack of the set which gets the information and affiliation to the set from a charger of the set.

According to an embodiment, the battery pack is configured to transfer data, particularly commands, from the charger to the power tool and/or from the power tool to the charger, by receiving data via the first and/or second communication interface, storing the data in the battery pack memory, and sending the data via the first and/or second communication interface.

The use of the battery pack as data communication means between the charger and the power tool allows the use of communication interfaces which frequently exist in power tool-battery pack-charger-combinations, e.g., to control charging or power supply. By way of this communication shared keys or set parameters may also be removed, taking a device from a power tool set or even lock commands may be communicated. The shared key, set parameter or set key on the power tool, battery pack or charger, can also be updated if the set to which the device belongs changes. If the power tool, battery pack or charger is assigned to a different set, a new shared key or set key may be installed on it. If the power tool, battery pack or charger is removed from the power tool set, the respective shared key, set key and/or set parameter of is deleted. The power tools, battery packs and chargers particularly may have unique identifiers, which may be transferred upon connection of the devices to each other and stored.

According to an embodiment the charger is configured to receive the shared key or the set parameter via a third communication interface from a backend and/or to transfer the data via the third communication interface from the charger to the backend or from the backend to the charger.

Chargers may be connected to the electrical power grid and can include a communication interface for connection via power line, Internet, WLAN or cellular phone module to a communications network. It is convenient to combine the power tools, battery packs and chargers which belong to a specific power tool set in a backend, e.g., by somebody in an office with an overview of the available devices. The respective setting is then communicated to the devices of the power tool system as described. The backend can also be used to receive information from the power tool, e.g., maintenance or usage information, via the battery pack and the charger. The charger may also comprise a communication module attached to a charging module and the third communication interface is realized in the communication module of the charger. New power tool sets, assignments to power tool sets, set parameters or shared keys can be created on the backend system, e.g., using an input output device in communication with the backend. The shard key or the set parameter is then communicated to a charger and transferred to power tools and/or battery packs which are assigned to the power tool set.

According to an embodiment, the battery pack is configured to require an iterative connection via the second communication interface to the charger, while the charger is connected to the backend or has been connected to the backend within a predefined time period, and/or the charger is configured to require a permanent or iterative connection via the third communication interface to the backend, particularly, a connection after a predefined amount of charging cycles, a predefined charging time or a predefined time period.

To ensure that communication from the backend to the power tool via the charger and the battery pack is enabled from time to time, the battery has to be connected to a charger which itself is from time to time in connection with the backend, preferably the battery pack is connected with the charger while the charger is connected to the backend. This ensures also, that if a whole power tool set with power tool, battery pack and charger is stolen, this set cannot used indefinitely without connection to the backend. Is, however, the charger connected to the backend, lock commands may be sent to the charger and transferred via the battery pack to the power tool. Such lock commands may disable the charger, the battery pack or the power tool. When the battery pack is not connected to the charger in communication with the backend as required, functions of the battery pack may be disabled, in particular by the battery pack controller, e.g., the battery pack may be locked, particularly, the battery pack may not or only partly be charged, or the battery pack may stop or limit supplying power. Similarly, the charger may disable or limit its functions to charge battery packs. The battery pack might be connected to the charger while the charger is connected to the backend, however, the connections might also be at different times and the charger stores information for and from the battery pack until connected to the battery pack and the backend, respectively.

According to an embodiment, the battery pack is configured to compare its shared key or derived set key with a shared key or a derived set key of any power tool it is connected to and/or any charger it is connected to and control by the battery pack controller the power supply for the power tool or the loading of the battery pack it is connected to based on the comparison.

According to an embodiment, the power tool is configured to compare its shared key or derived key stored with a shared key or a derived set key of any battery pack it is connected to and control by the power tool controller the operation of the power tool based on the comparison.

According to an embodiment, the charger is configured to compare its shared key or derived set key with a shared key or a derived set key of any battery pack it is connected to and control by the charger controller the charging of the battery pack it is connected to based on the comparison.

A comparison may be a simple one-to-one comparison of the shared keys or the set keys or it may comprise cryptographic verification techniques such as challenge-response authentication.

By comparing shared keys or set keys the devices of a power tool set, with a common shared key or set key, may, without further external input, in particular, without individual human interference, determine how to interact with devices which are not part of the power tool set. The interaction can be determined based on interaction schemes stored on the devices. The interaction of devices might, e.g., be restricted. A restriction could be absolute, meaning devices belonging to different sets, and not having a common shared key or set key, shall not work together at all. E.g., battery packs from one set cannot be charged on a charger belonging to another set. The restriction can be also partially, i.e., by time, duration, number or kind of applications, e.g., limiting the number of times the power tool can be used with the battery pack, if both belong to different sets and not sharing a common shared key or set key.

According to various embodiments, the first communication interface is a wireless or a wired communication interface and/or the second communication interface is a wireless or a wired communication interface and/or the third communication interface is a wireless or wired communication interface.

When the battery pack is connected to the power tool for charging, there is already a connection for the electrical supply of the power tool by the battery pack, which may be a wired connection, this connection or a physical connection established simultaneously with the electrical connection may be used for communication between the battery pack and the power tool. However, there may be also a wireless connection, e.g., a Bluetooth connection between the battery pack and the power tool or an inductive connection. Similarly, a physical connection might be used as wired communication interface between the battery pack and the charger. The charger may be connected to a LAN, whether wireless or by a cable or via the power line. Alternatively, the charger might be connected via a cellular telephone module, e.g., an embedded SIM, directly to a cellular telephone network.

According to an embodiment, the first communication interface and the second communication interface of the battery pack are realized as one wireless or wired physical interface configured to communicate to the charger and the power tool.

To facilitate manufacturing and reuse existing parts the first and second communication, interfaces can be implemented as one physical interface.

According to an embodiment, the battery pack is configured for communication via the second interface with the charger when the battery pack is not physically connected to the charger.

Often there are more battery packs than chargers and only one battery pack might be connected physically to the charger at a given time. Therefore, it might be advantageous to have a wireless communication between the battery pack and the charger, thus several battery packs may be connected via the charger with the backend, particularly, when the battery packs are in the vicinity of the charger, e.g., less than 10 m away from the charger.

In the described embodiments for the power tool system, the shared key or the set parameter and/or set key may be existent stored in the power tool memory, the battery pack memory and/or the charger memory. Power tools, battery packs and chargers with at least one common shared key or set key build the power tool set.

Further, a method for authorization of power tools, battery packs and chargers in a power tool system is provided. The power tool system includes a first power tool, a first battery pack, a first charger and a backend. The method includes an initialization step comprising the steps of: providing a shared key or a set parameter, for deriving a set key by a key derivation function from an initial key and the set parameter, via a wireless or wired connection from the backend to the first charger and storing the shared key or the set parameter on the first charger, providing the shared key or the set parameter via a wireless or wired connection from the first charger to the first battery pack and storing the shared key or the set parameter on the first battery pack and providing the shared key or the set parameter via a wireless or wired connection from the first battery pack to the first power tool and storing the shared key or the set parameter or the derived set key on the first power tool.

The transfer of shared keys or set parameters from a backend to devices of a power tool system is a convenient way to flexibly determine how devices of the power tool system may operate together. No determination of the operating together has to be made in a storage and changes can be made. By providing the set parameters or shared keys to the devices of the power tool system, the interoperability of the devices after being initialized is determined on the device level and does not need a continuous input from the backend, as the devices of the power tool system can be bundled to power tool sets.

According to an embodiment, deriving of the set key by a key derivation function is using an initial key or an initial key derived from public/private key pairs stored on the power tools, the battery packs and the chargers of the power tool system from which the key derivation function, particularly a Cipher-Based Message Authentication Code (CMAC) or hash-based message authentication code (HMAC) function, calculates the set key with the further input of the set parameter.

To improve the security of the power tool system not a shared key may be transmitted, which might be intercepted and copied, but a set parameter which is only used in the devices of the power tool system to determine or calculate the set key by using an initial key as additional input. Therefore, to copy the method, the knowledge of both the set parameter and the initial key is necessary.

According to an embodiment, the shared or derived set keys stored on the first battery pack with the shared or derived set keys stored on the first charger or shared or derived set keys stored on a second charger when the first battery pack is connected to the first or the second charger are compared.

According to an embodiment, the shared or derived set keys stored on the first battery pack with the shared or derived set keys stored on the first power tool or shared or derived set keys stored on a second power tool when the first battery pack is connected to the first or the second power tool are compared.

According to an embodiment, the shared or derived set keys stored on the first charger with shared keys or derived set keys stored on a second battery pack when the first charger is connected to the second battery pack are compared.

According to an embodiment, the shared or derived set keys stored on the first power tool with the shared or derived set keys stored on the second battery pack when the first power tool is connected with the second battery pack are compared.

Based on the results of any of the above-described comparisons, the use and/or the collaboration of any of the first and second battery pack, the first and second charger and the first and second power tool is limited or controlled. A comparison might be a simple one-to-one comparison of the shared keys or the set keys or it might comprise cryptographic verification techniques such as challenge-response authentication.

According to an embodiment, the method for authorization also includes comparing the initial keys stored on the first battery pack with the initial keys stored on the first charger or initial keys stored on a second charger when the first battery pack is connected to the first or the second charger and/or comparing the initial keys stored on the first battery pack with the initial keys stored on the first power tool or initial keys stored on a second power tool when the first battery pack is connected to the first or the second power tool and/or comparing the initial keys stored on the first charger with initial keys stored on a second battery pack when the first charger is connected to the second battery pack and/or comparing the initial keys stored on the first power tool with the initial keys stored on the second battery pack when the first power tool is connected with the second battery pack. The use and/or collaboration of any of the first and second battery packs, the first and second chargers and the first and second power tools is limited or controlled based on the results of any of the comparisons of the initial keys.

Comparing initial keys allows to check whether non initialized, e.g., fake devices are combined with the power tool system. It is a simple measure to reduce the risk that the method for authorization is gamed by devices, in particular battery packs, not belonging to the system. A comparison might be a simple one-to-one comparison of the shared keys or the set keys or it might comprise cryptographic verification techniques such as challenge-response authentication. All initial keys of a power tool system or of a manufacturer might be the same.

According to an embodiment, the limiting and/or controlling the use and/or collaboration comprises: a denial of operation including not charging of the first or second battery pack by the first or second charger and/or not providing power to the first or second power tool by the first or second battery pack; limiting the charging of the first or second battery pack by the first or second charger to a predefined number of chargings or a predefined level of charging; and providing power to the first or second power tool by the first or second battery pack to a predefined period of time or number of operations.

According to an embodiment, the providing of the shared key or the set parameter from the backend to the first charger, from the first charger to the first battery pack and/or from the first battery pack to the first power tool uses cryptographic protection, in particular, signing the shared key or the set parameter with a private key.

The various embodiments of the method for authorization may be combined with the use of the embodiments of the disclosed power tool system.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings.

### BRIEF DESCRIPTION OF THE DRAWINGS

Fig. 1 shows a schematic presentation of a power tool system and its operation regarding transfer of a shared key;
Fig. 2a shows a creation of a set key;
Fig. 2b shows a creation of two set keys for a device which is part of two power tool sets;
Fig. 3 shows a flowchart of an authorization method for a power tool system;
Fig. 4a shows a diagram depicting an authentication and control whether two devices belong to the same power tool system and power tool set;
Fig. 4b shows the diagram of Fig. 4a using public/private key pairs; and
Fig. 5 shows a cryptographic protection of a transfer of shared keys or set parameters.

### DETAILED DESCRIPTION OF THE DRAWINGS

In the Figures, like reference numerals designate like or functionally equivalent elements, unless otherwise indicated.

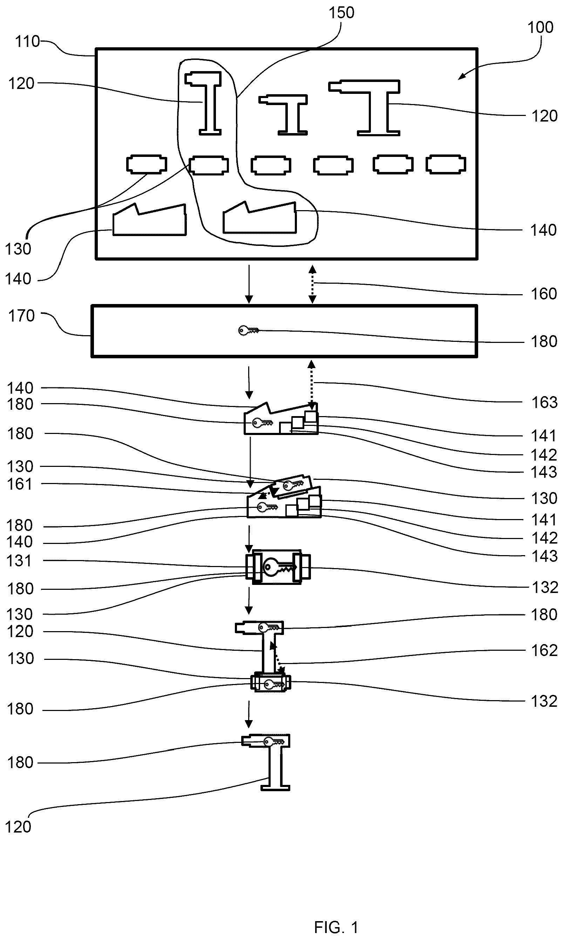

Fig. 1 shows how in an input/output (I/O) system 110, e.g., a personal computer, a tablet or a smart phone, a user may define a power tool 120, a battery pack 130 and a charger 140 of a power tool system 100 100, to belong to a power tool set 150. The power tool 120, the battery pack 130 and the charger 140 may have unique identifiers, which may be used to identify the physical power tool 120, battery pack 130 and charger 140. The power tool set may comprise a plurality of, different, power tools 120, battery packs 130 and/or chargers 140. The power tool 120, the battery pack 130 and/or the charger 140 may be part of further power tool sets 150.

Via an I/O backend communication channel 160 the I/O system communicates the chosen power tool 120, battery pack 130 and/or charger 140 to a backend 170. Further devices such as power tools 120, battery packs 130 and/or chargers 140 may be added later to the power tool set 150 or the set may be amended by removing devices from the set later. Undescribed power tools 120, battery packs 130 and chargers 140, which do not already have a shared key stored, may also automatically receive the shared key 180 from the first device they are connected to, without further involvement of the backend 170. The backend 170 may be realized as a cloud application or may be hosted on a server of the user. The backend 170 assigns a shared key 180 to the power tool set 150. The shared key might be generated by a random generator, forwarded by the I/O system or taken from a list.

When the backend 170 is connected to the charger 140, over a charger battery pack communication channel 161, via a third communication interface 141 of the charger 140, the shared key 180 is transferred to the charger 140 and stored in the charger memory 141. The backend 170 may also communicate further information, e.g., the identifiers of the battery pack 130 and the power tool 120, which are part of the power tool set. 150.

When the battery pack 130 is connected to the charger 140, the charger 140 communicates with the battery pack 130 over a charger battery pack communication channel 161 via a second communication 131 interface of the battery pack 130. When the charger 140 with the charger controller 143 determines from the communication with the battery pack 130 that the battery pack 130 is part of the power tool set 150, e.g., by checking the identifier of the battery pack 130 and comparing the identifier with identifiers the charger has received from the backend 170 for the power tool set 150, the charger 140 transfers the shared key 180 to the battery pack 130 and the shared key is stored in the battery pack memory, which is not show for clarity reasons in Fig. 1. Alternatively, a battery pack without any stored shared key might get the shared key 180 transferred and a battery pack with already different shared key stored and not identified as part of the power tool set 150 might not get the shared key 180 transferred to. The charger 140 may also communicate further information, e.g., the identifiers of the charger 140 and the power tool 120 or identifiers of further battery packs 130 or power tools 140, which are part of the power tool set 150.

The battery pack 130 with its first communication interface 132 and its second communication interface 131, can be removed from the charger 140 for usage in a power tool. When the battery pack 130 is attached to the power tool 120, the power tool 120 and the battery pack 130 communicate over a battery pack power tool communication channel 162 via the second communication interface 132 of the battery pack 130. The battery pack 130 can determine with its battery pack controller whether the power tool 120 is part of the power tool set 150, e.g., by comparing the identifier of the power tool 150 with identifiers of power tools transferred from the charger 140 to the battery pack 130. If the battery pack 130 determines that the power tool 120 is part of the power tool set 150 it transfers the shared key 180 to the power tool 120 and the shared key 180 is stored in the power tool in the power tool memory. Alternatively, a battery pack without any stored shared key 180 might get the shared key 180 transferred and a battery pack 130 with already different shared key 180 stored and not identified as part of the power tool set 150 might not get the shared key 180 transferred to. The charger 140 may also communicate further information, e.g., the identifiers of the charger 140 and the power tool 120, which are part of the power tool set 150. The battery pack 130 may also communicate further information, e.g., the identifiers of further battery packs, which are part of the power tool set 150. Alternatively, a power tool 120 without any stored shared key 180 might get the shared key 180 transferred and a power tool 120 with already a different shared key 180 stored, and not identified as part of the power tool set 150, might not get the shared key 180 transferred to.

When a new battery pack 130 without a stored shared key or set parameter and/or set key is charged on a charger 140, while the charger is connected to the backend 170, the charger will communicate with the identifier of the battery pack 130 to the backend 170. The backend 170 provides the shared key or set parameter of the power tool set 150 to which this battery pack 130 belongs, when the battery pack 130 is already assigned to a power tool set 150, the owner of the charger 140 may be informed about the new battery pack 130 connected to the backend 170 via the charger 140. The charger 140 may receive and transfer the shared key or set parameter to the battery pack 140.

Similarly, to the transfer of the shared key 180, a set parameter 220 might be distributed in a power tool system 100 to power tools 120, battery packs 130 and chargers 140 part of the power tool set 150. The power tools 120, battery packs 130 and chargers 140 may derive a set key 210 from the set parameter 220 as described in detail below.

When devices are connected to each other, the backend 170 may communicate with the charger 140 via the backend charger communication channel 163, the battery pack 130 may communicate with the charger 140 via the charger battery pack communication channel 161, and the battery pack 130 may communicate with the power tool 120 via the battery pack power tool communication channel 162. The communications may be bidirectional, and additionally to the shared key 180 or the set parameter 220, data on usage and commands may be transferred. In this way, data and commands may be transferred from the backend 170 to the power tool 120 and vice versa.

This system enables, e.g., in case of a stolen power tool 120 which is used with a battery pack 130 having a shared key 180 or set key 210 that is different from the shared key 180 of set key 210 of the tool, to allow only limited usage. If a predefined limit, e.g., time of supplying power by the battery pack 130, is exceeded, the power tool 120 may lock itself and/or the battery pack 130 will refuse to continue to work with the power tool 120. The battery pack 130 will also record the usage of the power tool 120 with a nonmatching shared key 180 or set key 210 and report this to the backend 170 at the next charging on a connected charger 140. The locked power tool 120 may only be unlocked by a battery pack 130 with a matching shared key 180 or set key 210 or by installing a new shared key 180 or set key 210 obtained from the backend 170 via a connected charger 140 and a battery pack 130. The battery pack 130 with the new shared key 180 or set parameter 220 may be a second battery pack 130 and the charger 140 providing the new shared key 180 or set parameter 210 may be a second charger 140.

Similarly, in case the battery pack 130 is stolen, power tools 120 may refuse to work with that battery pack 130 after a predefined number of applications or time. The charger 140 will refuse charging, and the battery pack 130 may lock itself, after a certain predefined number of applications or charging cycles. The charger 140 will also record the usage of this battery pack 130 with a nonmatching shared key 180 or set key 210 and report this to the backend 170. The battery pack 130 may only be unlocked by the backend 170 via the charger 140, while the charger 140 is connected with the backend 170 or when the charger 140 has received and stored information to unlock the battery pack 130 when connected to the backend 170.

Similarly, in case the charger 140 is stolen, the battery pack 130 will only accept a limited number of charging cycles from a charger 140 with a nonmatching shared key 180 or set key 210. The battery pack 130 will store this unauthorized charging cycle and report the charger 140 to the backend 170 at the next charging cycle on any connected charger 140. A connected charger can be locked immediately by the backend system at the next connection.

In case a complete power tool set 150, comprising the power tool 120, the battery pack 130 and the charger 140 is stolen, the power tool set 150 would work for a defined number of applications without any problems as they have the common shared key 180 or set key 210. However, when the power tool set 150 is reported stolen on the backend 170, the battery pack 130 will be locked at the next charging on a connected charger 140. The battery pack 130 will also receive a lock command for the stolen power tool 120, via the connected charger 140 from the backend 170. The battery pack 130 will thus lock the stolen power tool 120 or stolen charger 140 by applying a lock command next time the battery pack 130 gets connected.

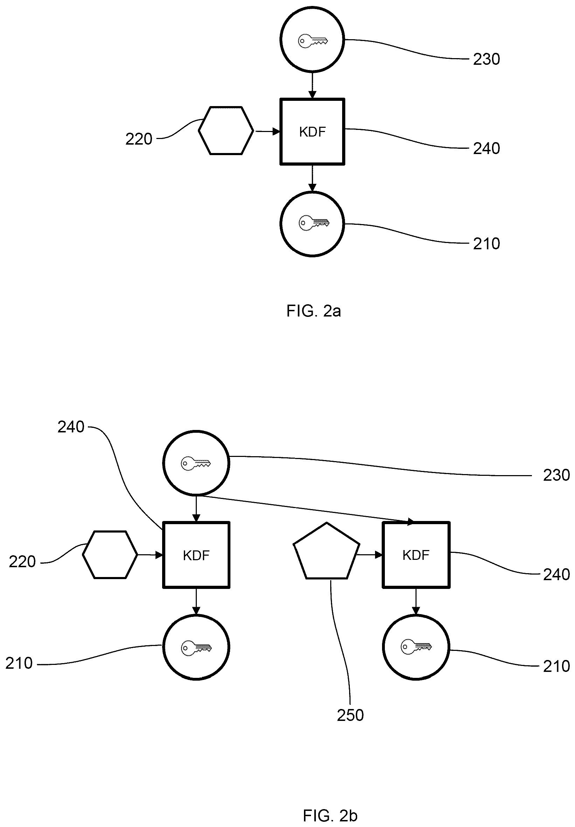

Fig. 2a shows a creation of a first set key 210 instead of the distribution of the shared key 180, as described above. Instead of the shared key 180 a first set parameter 220 is distributed. The power tool 120, the battery pack 130 and the charger 140 have already an initial key 230 stored. This initial key 230 may be stored in the power tool 120, the battery pack 130 and the charger 140 already upon production or in a storage environment. It might be stored on a chip level, e.g., on the power tool, charger, or battery pack controller, already in the production of the chip and it may be realized in a way not directly or easily accessible. A key derivation function 240 derives the first set key 210 from the first set parameter 220 and the initial key 230. Using a secret initial key 230 can add an extra layer of security compared to distribution of the shared key 180 and a potential interception of the transmission of the shared key 180.

Fig. 2b shows how the assignment to two power tool sets may be realized with a first set parameter 220 and a second set parameter 250 using the same initial key 230 and the same key derivation function 240. The power tool 120, the battery pack 130 or the charger 140 can store in this way the first set key 210 and a second set key 260, thus marking the device belonging to a first and a second power tool set.

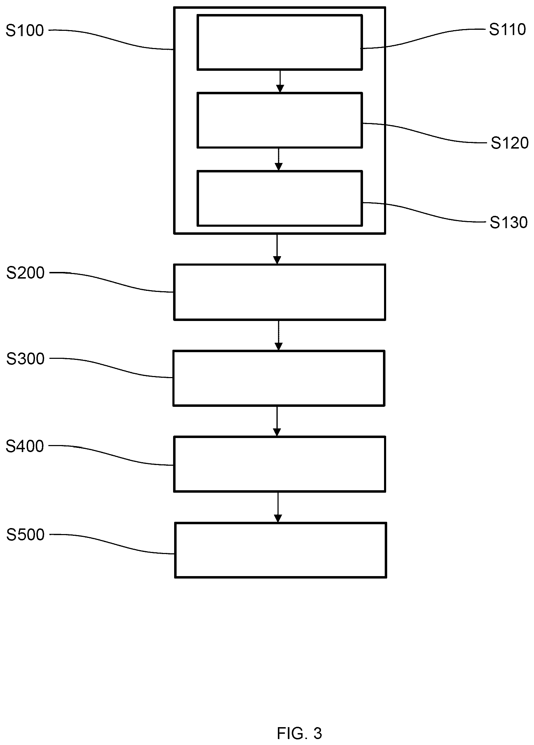

Fig. 3 shows a flowchart of an authorization method for a power tool system 100 with a first power tool 120, a first battery pack 130, a first charger 140 and a backend 170. In an initialization step S100, a shared key 180 or a set parameter 220 is distributed from the backend 170 to the first power tool 120, the first battery pack 130 and the first charger 140. This distribution is implemented by providing in step S 110 a shared key or a set parameter via a wireless or wired connection from the backend 170 to the first charger 140 and storing the shared key or the set parameter 220 on the first charger 140. From the set parameter 220 a set key 210 can be derived by a key derivation function 240 from an initial key 230 and the set parameter 220 as discussed above in relation to Fig. 2a and 2b. The wireless or wired connection can be, e.g., a connection of the backend 170 to the first charger 140 via a cellular network, via a wireless local access network or via a cable connection of the first charger 140 to a local access network. The shared key 180 or the set parameter 220 can be further distributed in the power tool system 100 by the step S120 of providing the shared key 180 or the set parameter 220 via a wireless or wired connection from the first charger 140 to the first battery pack 130 and storing the shared key 180 or the set parameter 220 on the first battery pack 130. The wireless or wired connection might be a Bluetooth connection between the first battery pack 130 and the first charger 140 or a physical wire connection when the first battery pack 130 is attached to the first charger 140 for charging. The further distribution of the shared key 180 or the set parameter 220 can then be done by the first battery pack 130 to the first power tool 120 by providing the shared key 180 or the set parameter 220 via a wireless or wired connection from the first battery pack 130 to the first power tool 120 and storing the shared key 180 or the set parameter 220 or the set key 210 derived from the set parameter 220 on the first power tool 120.

With such a shared key 180 distributed or a set key 210 derived from a distributed set parameter 220 in a power tool system 100 various authentication or authorization methods may be implemented. E.g., in step S200 comparisons of the initial key 230 and in step S400 comparisons of the shared key 180 or set key 210 of devices can be performed. The use and/or collaboration of devices might be limited in steps S300 and S500 based on the results of the comparisons.

To ensure that a power tool 120, a battery pack 130 or a charger 140 is part of the power tool system 100 and is, e.g., not a device not fitting into the system or a counterfeit part, the initial key 230 of the device can be checked. If all devices of a power tool system 100 have the same initial key 230 this can be done by a simple comparison of the initial keys 230 of the devices. Therefore, various comparisons can be performed:
comparing the initial keys 230 stored on the first battery pack 130 with the initial keys 230 stored on the first charger 140 or initial keys 230 stored on a second charger 140 when the first battery pack 130 is connected to the first or the second charger 140;
comparing the initial keys 230 stored on the first battery pack 130 with the initial keys 230 stored on the first power tool 120 or initial keys 230 stored on a second power tool 120 when the first battery pack 130 is connected to the first or the second power tool 120;
comparing the initial keys 230 stored on the first charger 140 with initial keys 230 stored on a second battery pack 130 when the first charger 140 is connected to the second battery pack 130; and/or
comparing the initial keys 230 stored on the first power tool 120 with the initial keys 230 stored on the second battery pack 130 when the first power tool 120 is connected with the second battery pack 130.

The comparison might be, as described, simple one-to-one comparison of the initial keys 230 or it might comprise cryptographic verification techniques such as challenge-response authentication.

In step S300, the use and/or collaboration of any of the first and second battery pack, the first and second charger and the first and second power tool based on the results of any of the comparisons of the initial keys can be limited or controlled. E.g., the charger 140 can refuse charging of a battery pack 130 with a different initial key 230.

After establishing that two devices are part of the power tool system 100 it can be checked whether the devices belong to the same power tool set 150. This can again be done by comparisons in step S400, in this case of the shared key 180 or the set key 210 of the devices:
comparing the shared or derived set keys 180, 210 stored on the first battery pack 130 with the shared or derived set keys 180, 210 stored on the first power tool 120 or shared or derived set keys 180, 210 stored on the second power tool 120 when the first battery pack 130 is connected to the first or the second power tool 120;
comparing the shared or derived set keys 180, 210 stored on the first charger 140 with shared or derived set keys 180, 210 stored on the second battery pack 130 when the first charger 140 is connected to the second battery pack 130; and/or
comparing the shared or derived set keys 180, 210 stored on the first power tool 120 with the shared or derived set keys 180, 210 stored on the second battery pack 130 when the first power tool 120 is connected with the second battery pack 130.

The comparison might be a simple one-to-one comparison of the shared or set keys 180, 210 or it might comprise cryptographic verification techniques such as challenge-response authentication.

Based on the results of any of these comparisons the use and/or collaboration of any of the first and second battery pack, the first and second charger and the first and second power tool, can be limited or controlled in step S500, e.g., a battery pack 130 not part of the power tool set 150 may be charged only for a limited amount of cycles by a charger 140 which is part of the power tool set, identified by the shared key or set key.

In steps S300 and S500, the limiting and/or controlling the use and/or collaboration can be realized in various way, e.g., as: a denial of operation including not charging of the first or second battery pack 130 by the first or second charger 140 and/or not providing power to the first or second power tool 120 by the first or second battery pack 130, limiting the charging of the first or second battery pack 130 by the first or second charger 140 to a predefined number of chargings or a predefined level of charging and providing power to the first or second power tool 120 by the first or second battery pack 130 to a predefined period of time or number of operations. It is possible to assign different limitations for different power tool sets 150. E.g., if the power tool 120 and the battery pack 130 belong to set A, all functions can be enabled. However, if the power tool 120 belongs to set A and the battery pack belongs to set B, charging from this battery pack may be limited to a limited number of times. Similarly, if a power tool 120 is in a repair center, only reading out data and a limited usage for testing purposes may be allowed.

When a new power tool 120 or new battery pack 130 is used for the first time, it may operate for a predefined time or number of charging cycles with a battery pack 130 or a charger 140 without having a common shared key 180. The battery pack or the charger 140 is recording the identifier of the new power tool 120 or the new battery pack 130. At the next charging of the battery pack on the charger, while connected to the backend 170 or the next connection of the charger 140 to the backend 170, the identifier of the new power tool 120 or battery pack 130 will be looked up at the backend 170 and appropriate shared keys 180 will be downloaded and saved to the battery pack 130 or charger 140. At the next usage of the power tool 120 with the battery pack 130, the stored shared key 180 will be transferred to the power tool 120. The power tool 120 is now bound to the same power tool set 150 as the battery pack 130. Similarly, the shared key 180 can be transferred to the battery pack 130 while charging on a connected charger 140 or the next time the battery pack is connected to the charger 140 which in the meantime had a connection with the backend 170.

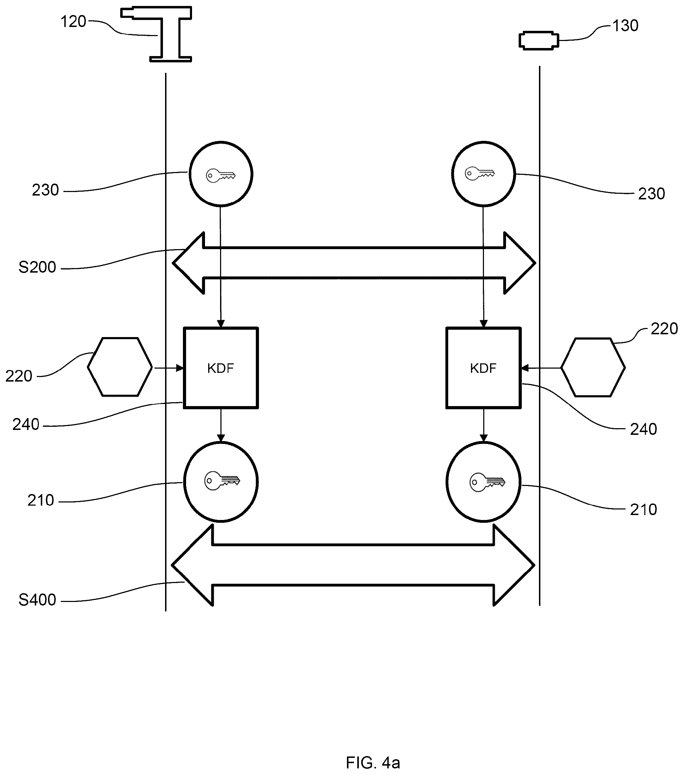

Fig. 4a shows a diagram depicting the authentication and control whether two devices belong to the same power tool system 100 based on the same initial key 230 and the same power tool set 150 on the example of the power tool 120 and the battery pack 130. The initial key 230 is a common key that is installed on all power tools 120, battery packs 130, and chargers 140 which belong to a power tool system 100. This might be all devices by a manufacturer or a group of devices by this manufacturer or even devices of collaborating manufacturers. This initial key 230 has to be kept secret. It is preferable if this common initial key 230 can be installed on devices only once and this is done during production. The initial key 230 may also be stored on the backend 170 and installed on devices when they are onboarded by the customer. This can be done, e.g., via a smartphone or via a service adapter at a warehouse or shop.

The set parameter 220 is installed on all power tools 120, battery packs 130 and chargers 140 that are part of the power tool set and that shall be able to work with each other, which might also be changed afterwards. The transfer of the set parameter 220 has been described above in relation to Fig. 1 and Fig. 3. Each power tool 120, battery pack 130 or charger 140 derives the set key 210 using the key derivation function 240 with the initial key 230 and the set parameter 220 as input parameters. This has been described in detail with regard to Fig. 2.

To verify if power tools 120, battery packs 130 and chargers 140 belong to the same power tool system 100, e.g., are from same manufacturer, a comparison of the initial keys 230 can be performed as described in detail, e.g., with regard to Fig. 3 and the step S200. This comparison may use any security mechanism to verify if both devices, e.g., the power tool 120 and the battery pack 130 in Fig. 4a own the same initial key 230. The comparison may be a simple comparison of the initial keys 230 or performing a challenge-response authentication technique to verify if both devices own the same initial key 230.

After verification that the power tool 120 and the battery pack 130 belong to the same power tool system 100 the verification whether they belong to the same power tool set 150 can be done, as described above in detail with regard to step S400 in Fig. 4a.

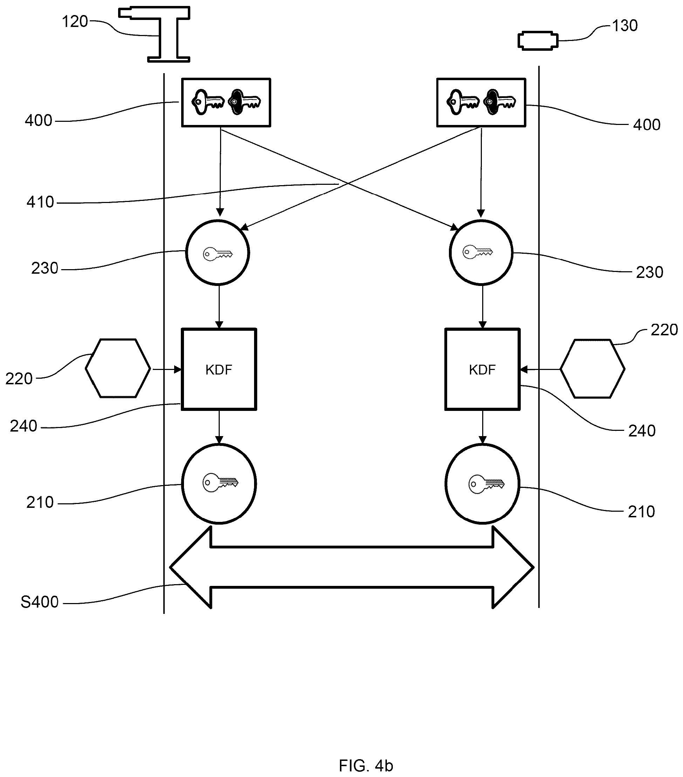

There is always the risk that one initial key 230 used for a large number of devices may be get known and may be used with malicious intent, e.g., to game an authorization system. Fig. 4b shows therefore a way for the authentication and control whether two devices belong to the same power tool system 100 where the initial key 230 of Fig. 4a is based on public/private key pairs

Unique public/private key-pairs 400 or certificates may be installed on power tools 120, battery packs 130, and chargers 140. These unique public/private key-pairs 400 or certificates are installed only once, e.g., during production or in a warehouse. When a device is connected to another device, e.g. when the power tool 120 is connected to the battery pack 130, they can mutually authenticate and verify if both devices are part of the same power tool system 100, e.g., manufactured by the same manufacturer, by using certificates and the public key exchange 410 with each other to derive their common initial key 230, e.g., using a Diffie Hellman algorithm. This initial key 230 is in this embodiment only shared between this pair of devices, e.g., the power tool 120 and the battery pack 130. Once the initial key 230 is available after the public key exchange 400, the further process remains as described. Using the initial key 230 and the set parameter 220, the power tool 120 and the battery pack 130 can derive the set key 210 to verify if and how they shall operate with each other or not, as described above.

If the shared key or set parameter can be obtained by somebody with malicious intent, they can be used for stolen or counterfeit devices which might be used in a power tool system 100 and which might game the authorization method. The power tools, battery packs or chargers do not necessarily have a mechanism to verify if the shared key or set parameter is on a stolen or counterfeited device.

The backend 170 can use a private key to apply an additional layer of security to the shared key 180 or set parameter 220. E.g., the shared key 180 or set parameter 220 may be signed with a private key before being sent to chargers 140, battery packs 130 or power tools 120. In this case, the public key to verify this signature also needs be installed on all devices.

Alternatively, the backend 170 stores public/private key-pairs of all power tools 120, battery packs 130 and chargers 140 of the system. To send shared keys 180 or set parameters 220 to a device, the backend 170 uses its corresponding private key to sign. The device can verify this signature with its own public key that is installed on it. However, this requires that public/private key-pairs of all power tools 120, battery packs 130 and chargers 140 of the system are stored on backend 170, which may not be feasible for large numbers of devices.

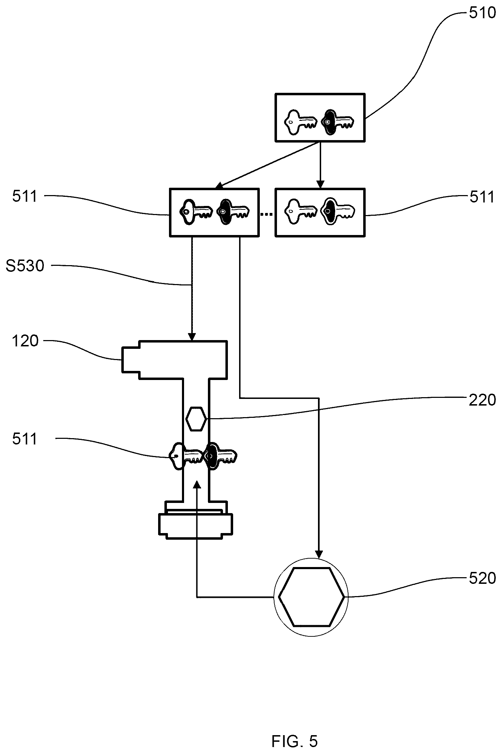

Fig. 5 shows a more manageable solution which can be implemented with a hierarchical key derivation. In this case, the backend 170 stores only the parent public/private key-pair 510 and derives child public/private key-pairs 511 for the power tool 120, the battery pack 130 or the charger 140 using its parent public/private key-pair and an identification number (ID) of this power tool, battery pack or charger. These children public/private key-pairs are installed S530 on this power tool 120, battery pack 130 and charger 140 only once, e.g., during production or in a warehouse.

When the backend 170 needs to create a shared key 180 or a set parameter 220 for a power tool system 100, it can use its parent public/private key-pair 510 and the IDs of the devices to derive the children public/private key-pairs 511 of these devices. The backend 170 then uses the private keys of these devices to sign and send the shared key 180 or set parameter 220, as signed set parameter 520. The power tool 120, the battery pack 130 or charger 140 can verify the signature of the received signed shared key 180 or set parameter 220 by using its own child public key as shown in Fig. 5.

Additionally, the backend 170 may sign shared keys 180 or set parameters 220 with a replay protection counter to protect against someone reusing older signed shared keys 180 or set parameters 220 to unlock/misuse the power tool 120, battery pack 130 or charger 140.

Although the present invention has been described in accordance with preferred embodiments, it is obvious for the person skilled in the art that modifications are possible in all embodiments.

### List of reference characters:

- 110: input/output system
- 120: power tool
- 130: battery pack
- 140: charger
- 141: third communication interface
- 142: charger memory
- 143: charger controller
- 150: power tool set
- 160: I/O backend communication channel
- 161: charger battery pack communication channel
- 162: battery pack power tool communication channel
- 163: backend charger communication channel
- 170: backend
- 180: shared key
- 210: first set key
- 220: first set parameter
- 230: initial key
- 240: key derivation function
- 250: second set parameter
- 260: second set key
- 400: public/private key pairs
- 410: public key exchange
- 510: parent public/private key pair
- 511: child public/private key pair
- 520: signed set parameter
- S100: initialization step
- S110: providing shared key or set parameter from backend to charger
- S120: providing shared key or set parameter from charger to battery pack
- S130: providing shared key or set parameter from battery pack to power tool
- S200: comparison of initial keys
- S300: limiting or controlling collaboration of devices based on comparison of initial keys
- S400: comparison of shared keys or set keys
- S500: limiting or controlling collaboration of devices based on comparison of shared or set keys
- S530: installation of child public/private key pair

## Claims

1. A power tool system (100), comprising:
a cordless power tool (120) with a power tool controller and a power tool memory;
an exchangeable battery pack (130) for the power tool (120) comprising:
a charger (140);
a battery pack controller and a battery pack memory,
a first communication interface for communication with the power tool (120);
and
a second communication interface for communication with the charger (140);
wherein the charger comprises a charger controller (142) and a charger memory (142); wherein the charger (140) is configured to store in the charger memory (142) a shared key (180) or to store a set parameter (220, 250) and derive a set key (210, 260) by the charger controller (142) from the set parameter (220, 250);
the power tool system (100) being **characterized in that**
the battery pack (130) is configured to receive the shared key (180) or the set parameter (220, 250) via the second communication interface from the charger (140) and to store the shared key (180) or to store the set parameter (220, 250) and derive the set key (210, 260) by the battery pack controller from the set parameter (220, 250); and
wherein the power tool (120) is configured to receive the shared key (180) or the set parameter (220, 250) via the first communication interface from the battery pack (130) and to store the shared key (180) or to store the set key (210, 260) derived by the power tool controller from the set parameter (220, 250) and/or to store the set parameter (220, 250) in the power tool memory and derive the set key (210, 260) by the power tool controller from the set parameter (220, 250).

2. The power tool system (100) according to claim 1, wherein the battery pack (130) is configured to transfer data from the charger (140) to the power tool (120) and/or from the power tool (120) to the charger (140), by receiving data via the first and/or second communication interface, storing the data in the battery pack memory, and sending the data via the first and/or second communication interface.

3. The power tool system (100) according to claim 1, wherein the charger (140) is configured to receive the shared key (180) or the set parameter (220, 250) via a third communication interface (141) from a backend (170) and/or to transfer the data via the third communication interface (141) from the charger (140) to the backend (170) or from the backend (170) to the charger (140).

4. The power tool system (100) according to claim 3, wherein the battery pack (130) is configured to require an iterative connection via the second communication interface to the charger (140), while the charger (140) is connected to the backend (170) or has been connected to the backend (170) within a predefined time period, and/or the charger (140) is configured to require a permanent or iterative connection via the third communication interface (141) to the backend (170), wherein the connection is after a predefined amount of charging cycles, a predefined charging time or a predefined time period.

5. The power tool system (100) according to claim 1, wherein:
the battery pack (130) is configured to:
compare its shared key (180) or derived set key (210, 260) with a shared key (180) or a derived set key (210, 260) of any power tool (120) it is connected to and/or any charger (140) it is connected to; and
control, by the battery pack controller, the power supply for the power tool (120) or the loading of the battery pack (130) it is connected to based on the comparison; and/or
the power tool (120) is configured to:
compare its shared key (180) or derived set key (210, 260) with a shared key (180) or a derived set key (210, 260) of any battery pack (130) it is connected to; and
control, by the power tool controller, the operation of the power tool (120) based on the comparison;
and/or
the charger (140) is configured to:
compare its shared key (180) or derived set key (210, 260) with a shared key (180) or a derived set key (210, 260) of any battery pack (130) it is connected to and control by the charger controller (142) the charging of the battery pack (130) it is connected to based on the comparison.

6. The power tool system (100) according to claim 1, wherein the first communication interface is a wireless or a wired communication interface and/or the second communication interface is a wireless or a wired communication interface and/or the third communication interface (141) is a wireless or wired communication interface.

7. The power tool system (100) according to claim 1, wherein the first communication interface and the second communication interface of the battery pack (130) are realized as one wireless or wired physical interface configured to communicate to the charger (140) and the power tool (120).

8. The power tool system (100) according to claim 1, wherein the battery pack (130) is configured for communication via the second interface with the charger (140) when the battery pack (130) is not physically connected to the charger (140).

9. A method for authorization of power tools (120), battery packs (130) and chargers (140) in a power tool system (100) comprising a first power tool (120), a first battery pack (130), a first charger (140) and a backend (170), comprising the steps of:
providing a shared key (180) or a set parameter (220, 250), for deriving a set key (210, 260) by a key derivation function (240) from an initial key (230) and the set parameter (220, 250), via a wireless or wired connection from the backend (170) to the first charger (140);
the method being **characterized by** providing the shared key (180) or the set parameter (220, 250) via a wireless or wired connection from the first charger (140) to the first battery pack (130) and storing the shared key (180) or the set parameter (220, 250) on the first battery pack (130); and
providing the shared key (180) or the set parameter (220, 250) via a wireless or wired connection from the first battery pack (130) to the first power tool (120) and storing the shared key (180) or storing the set parameter (220, 250) and/or the derived set key (210, 260) on the first power tool (120).

10. The method according to claim 9, wherein deriving the set key (210, 260) by a key derivation function (240) is using an initial key (230) or an initial key (230) derived from public/private key pairs (400) stored on the power tools (120), the battery packs (130) and the chargers (140) of the power tool system (100) from which the key derivation function (240), particularly a Cipher-Based Message Authentication Code (CMAC) or a hash-based message authentication code (HMAC) function, calculates the set key (210, 260) with the further input of the set parameter (220, 250).

11. The method according to claim 9, further comprising the steps of:
comparing the shared or derived set keys (210, 260) stored on the first battery pack (130) with the shared or derived set keys (210, 260) stored on the first charger (140) or shared or derived set keys (210, 260) stored on a second charger (140) when the first battery pack (130) is connected to the first or the second charger (140);
and/or
comparing the shared or derived set keys (210, 260) stored on the first battery pack (130) with the shared or derived set keys (210, 260) stored on the first power tool (120) or shared or derived set keys (210, 260) stored on a second power tool (120) when the first battery pack (130) is connected to the first or the second power tool (120);
and/or
comparing the shared or derived set keys (210, 260) stored on the first charger (140) with shared or derived set keys (210, 260) stored on a second battery pack (130) when the first charger (140) is connected to the second battery pack (130);
and/or
comparing the shared or derived set keys (210, 260) stored on the first power tool (120) with the shared or derived set keys (210, 260) stored on the second battery pack (130) when the first power tool (120) is connected with the second battery pack (130);
and
limiting and/or controlling the use and/or collaboration of any of the first and second battery pack (130), the first and second charger (140) and the first and second power tool (120) based on the results of any of the comparisons.

12. The method according to claim 10, further comprising the steps of:
comparing the initial keys (230) stored on the first battery pack (130) with the initial keys (230) stored on the first charger (140) or initial keys (230) stored on a second charger (140) when the first battery pack (130) is connected to the first or the second charger (140);
and/or
comparing the initial keys (230) stored on the first battery pack (130) with the initial keys (230) stored on the first power tool (120) or initial keys (230) stored on a second power tool (120) when the first battery pack (130) is connected to the first or the second power tool (120);
and/or
comparing the initial keys (230) stored on the first charger (140) with initial keys (230) stored on a second battery pack (130) when the first charger (140) is connected to the second battery pack (130);
and/or
comparing the initial keys (230) stored on the first power tool (120) with the initial keys (230) stored on the second battery pack (130) when the first power tool (120) is connected with the second battery pack (130);
and
limiting and/or controlling the use and/or collaboration of any of the first and second battery pack (130), the first and second charger (140) and the first and second power tool (120) based on the results of any of the comparisons of the initial keys (230).

13. The method according to claim 11, wherein the limiting and/or controlling the use and/or collaboration comprises:
a denial of operation including not charging of the first or second battery pack (130) by the first or second charger (140) and/or not providing power to the first or second power tool (120) by the first or second battery pack (130);
and/or
limiting the charging of the first or second battery pack (130) by the first or second charger (140) to a predefined number of chargings or a predefined level of charging;
and/or
providing power to the first or second power tool (120) by the first or second battery pack (130) to a predefined period of time or number of operations.

14. The method according to claim 9, wherein providing the shared key (180) or the set parameter (220, 250) from the backend (170) to the first charger (140), from the first charger (140) to the first battery pack (130) and/or from the first battery pack (130) to the first power tool (120) uses cryptographic protection of signing the shared key (180) or the set parameter (220, 250) with a private key.

15. The method according to claim 9 using the power tool system (100) according to claim.

## Patentansprüche

1. Elektrowerkzeugsystem (100), umfassend:
ein schnurloses Elektrowerkzeug (120) mit einer Elektrowerkzeugsteuerung und einem Elektrowerkzeugspeicher;
ein austauschbares Batteriepack (130) für das Elektrowerkzeug (120), das Folgendes umfasst:
ein Ladegerät (140);
eine Batteriepacksteuerung und einen Batteriepackspeicher,
eine erste Kommunikationsschnittstelle zur Kommunikation mit dem Elektrowerkzeug (120); und
eine zweite Kommunikationsschnittstelle zur Kommunikation mit dem Ladegerät (140); wobei das Ladegerät eine Ladegerätesteuerung (142) und einen Ladegerätespeicher (142) umfasst;
wobei das Ladegerät (140) dazu ausgelegt ist, in dem Ladegerätespeicher (142) einen gemeinsam genutzten Schlüssel (180) zu speichern oder einen festgelegten Parameter (220, 250) zu speichern und einen festgelegten Schlüssel (210, 260) durch die Ladegerätesteuerung (142) aus dem festgelegten Parameter (220, 250) abzuleiten;
wobei das Elektrowerkzeugsystem (100) **dadurch gekennzeichnet ist, dass**
das Batteriepack (130) dazu ausgelegt ist, den gemeinsam genutzten Schlüssel (180) oder den festgelegten Parameter (220, 250) über die zweite Kommunikationsschnittstelle von dem Ladegerät (140) zu empfangen und den gemeinsam genutzten Schlüssel (180) zu speichern oder den festgelegten Parameter (220, 250) zu speichern und den festgelegten Schlüssel (210, 260) durch die Batteriepacksteuerung aus dem festgelegten Parameter (220, 250) abzuleiten; und
wobei das Elektrowerkzeug (120) dazu ausgelegt ist, den gemeinsam genutzten Schlüssel (180) oder den festgelegten Parameter (220, 250) über die erste Kommunikationsschnittstelle von dem Batteriepack (130) zu empfangen und den gemeinsam genutzten Schlüssel (180) zu speichern oder den von der Elektrowerkzeugsteuerung aus dem festgelegten Parameter (220, 250) abgeleiteten festgelegten Schlüssel (210, 260) zu speichern und/oder den festgelegten Parameter (220, 250) in dem Elektrowerkzeugspeicher zu speichern und den festgelegten Schlüssel (210, 260) durch die Elektrowerkzeugsteuerung aus dem festgelegten Parameter (220, 250) abzuleiten.

2. Elektrowerkzeugsystem (100) nach Anspruch 1, wobei das Batteriepack (130) dazu ausgelegt ist, Daten von dem Ladegerät (140) zu dem Elektrowerkzeug (120) und/oder von dem Elektrowerkzeug (120) zu dem Ladegerät (140) zu übertragen, indem Daten über die erste und/oder zweite Kommunikationsschnittstelle empfangen werden, die Daten in dem Batteriepackspeicher gespeichert werden und die Daten über die erste und/oder zweite Kommunikationsschnittstelle gesendet werden.

3. Elektrowerkzeugsystem (100) nach Anspruch 1, wobei das Ladegerät (140) dazu ausgelegt ist, den gemeinsam genutzten Schlüssel (180) oder den festgelegten Parameter (220, 250) über eine dritte Kommunikationsschnittstelle (141) von einem Backend (170) zu empfangen und/oder die Daten über die dritte Kommunikationsschnittstelle (141) von dem Ladegerät (140) zu dem Backend (170) oder von dem Backend (170) zu dem Ladegerät (140) zu übertragen.

4. Elektrowerkzeugsystem (100) nach Anspruch 3, wobei das Batteriepack (130) dazu ausgelegt ist, eine iterative Verbindung über die zweite Kommunikationsschnittstelle mit dem Ladegerät (140) zu benötigen, während das Ladegerät (140) mit dem Backend (170) verbunden ist oder mit dem Backend (170) innerhalb eines vordefinierten Zeitraums verbunden war, und/oder das Ladegerät (140) dazu ausgelegt ist, eine permanente oder iterative Verbindung über die dritte Kommunikationsschnittstelle (141) mit dem Backend (170) zu benötigen, wobei die Verbindung nach einer vordefinierten Anzahl von Ladezyklen, einer vordefinierten Ladezeit oder einem vordefinierten Zeitraum erfolgt.

5. Elektrowerkzeugsystem (100) nach Anspruch 1, wobei:
das Batteriepack (130) zu Folgendem ausgelegt ist:
Vergleichen seines gemeinsam genutzten Schlüssels (180) oder abgeleiteten festgelegten Schlüssels (210, 260) mit einem gemeinsam genutzten Schlüssel (180) oder einem abgeleiteten festgelegten Schlüssel (210, 260) eines Elektrowerkzeugs (120), mit dem es verbunden ist, und/oder eines Ladegeräts (140), mit dem es verbunden ist; und
Steuern der Stromversorgung für das Elektrowerkzeug (120) oder des Ladens des Batteriepacks (130), mit dem es verbunden ist, durch die Batteriepacksteuerung basierend auf dem Vergleich;
und/oder
das Elektrowerkzeug (120) zu Folgendem ausgelegt ist:
Vergleichen seines gemeinsam genutzten Schlüssels (180) oder abgeleiteten festgelegten Schlüssels (210, 260) mit einem gemeinsam genutzten Schlüssel (180) oder einem abgeleiteten festgelegten Schlüssel (210, 260) eines Batteriepacks (130), mit dem es verbunden ist; und
Steuern des Betriebs des Elektrowerkzeugs (120) durch die Elektrowerkzeugsteuerung basierend auf dem Vergleich;
und/oder
das Ladegerät (140) zu Folgendem ausgelegt ist:
Vergleichen seines gemeinsam genutzten Schlüssels (180) oder abgeleiteten festgelegten Schlüssels (210, 260) mit einem gemeinsam genutzten Schlüssel (180) oder einem abgeleiteten festgelegten Schlüssel (210, 260) eines Batteriepacks (130), mit dem es verbunden ist, und Steuern des Ladens des Batteriepacks (130), mit dem es verbunden ist, durch die Ladegerätesteuerung (142) basierend auf dem Vergleich.

6. Elektrowerkzeugsystem (100) nach Anspruch 1, wobei die erste Kommunikationsschnittstelle eine drahtlose oder eine drahtgebundene Kommunikationsschnittstelle ist und/oder die zweite Kommunikationsschnittstelle eine drahtlose oder eine drahtgebundene Kommunikationsschnittstelle ist und/oder die dritte Kommunikationsschnittstelle (141) eine drahtlose oder drahtgebundene Kommunikationsschnittstelle ist.

7. Elektrowerkzeugsystem (100) nach Anspruch 1, wobei die erste Kommunikationsschnittstelle und die zweite Kommunikationsschnittstelle des Batteriepacks (130) als drahtlose oder drahtgebundene physische Schnittstelle realisiert sind, die dazu ausgelegt ist, mit dem Ladegerät (140) und dem Elektrowerkzeug (120) zu kommunizieren.

8. Elektrowerkzeugsystem (100) nach Anspruch 1, wobei das Batteriepack (130) zur Kommunikation über die zweite Schnittstelle mit dem Ladegerät (140) ausgelegt ist, wenn das Batteriepack (130) nicht physisch mit dem Ladegerät (140) verbunden ist.

9. Verfahren zur Autorisierung von Elektrowerkzeugen (120), Batteriepacks (130) und Ladegeräten (140) in einem Elektrowerkzeugsystem (100), das ein erstes Elektrowerkzeug (120), ein erstes Batteriepack (130), ein erstes Ladegerät (140) und ein Backend (170) umfasst, umfassend die Schritte:
Bereitstellen eines gemeinsam genutzten Schlüssels (180) oder eines festgelegten Parameters (220, 250) zum Ableiten eines festgelegten Schlüssels (210, 260) durch eine Schlüsselableitfunktion (240) aus einem Anfangsschlüssel (230) und dem festgelegten Parameter (220, 250) über eine drahtlose oder drahtgebundene Verbindung von dem Backend (170) zu dem ersten Ladegerät (140);
wobei das Verfahren **gekennzeichnet ist durch**
Bereitstellen des gemeinsam genutzten Schlüssels (180) oder des festgelegten Parameters (220, 250) über eine drahtlose oder drahtgebundene Verbindung von dem ersten Ladegerät (140) zu dem ersten Batteriepack (130) und Speichern des gemeinsam genutzten Schlüssels (180) oder des festgelegten Parameters (220, 250) auf dem ersten Batteriepack (130); und
Bereitstellen des gemeinsam genutzten Schlüssels (180) oder des festgelegten Parameters (220, 250) über eine drahtlose oder drahtgebundene Verbindung von dem ersten Batteriepack (130) zu dem ersten Elektrowerkzeug (120) und Speichern des gemeinsam genutzten Schlüssels (180) oder Speichern des festgelegten Parameters (220, 250) und/oder des abgeleiteten festgelegten Schlüssels (210, 260) auf dem ersten Elektrowerkzeug (120).

10. Verfahren nach Anspruch 9, wobei das Ableiten des festgelegten Schlüssels (210, 260) durch eine Schlüsselableitfunktion (240) einen Anfangsschlüssel (230) oder einen Anfangsschlüssel (230) verwendet, der aus öffentlichen/privaten Schlüsselpaaren (400) abgeleitet ist, die auf den Elektrowerkzeugen (120), den Batteriepacks (130) und den Ladegeräten (140) des Elektrowerkzeugsystems (100) gespeichert sind und aus denen die Schlüsselableitfunktion (240), insbesondere eine Funktion auf Basis eines Chiffrebasierten Nachrichtenauthentifizierungscodes (CMAC) oder eines HMAC-basierten Nachrichtenauthentifizierungscodes (HMAC), unter weiterer Eingabe des festgelegten Parameters (220, 250) den festgelegten Schlüssel (210, 260) berechnet.

11. Verfahren nach Anspruch 9, ferner umfassend die folgenden Schritte:
Vergleichen der gemeinsam genutzten oder abgeleiteten festgelegten Schlüssel (210, 260), die auf dem ersten Batteriepack (130) gespeichert sind, mit den gemeinsam genutzten oder abgeleiteten festgelegten Schlüsseln (210, 260), die auf dem ersten Ladegerät (140) gespeichert sind, oder gemeinsam genutzten oder abgeleiteten festgelegten Schlüsseln (210, 260), die auf einem zweiten Ladegerät (140) gespeichert sind, wenn das erste Batteriepack (130) mit dem ersten oder dem zweiten Ladegerät (140) verbunden ist;
und/oder
Vergleichen der gemeinsam genutzten oder abgeleiteten festgelegten Schlüssel (210, 260), die auf dem ersten Batteriepack (130) gespeichert sind, mit den gemeinsam genutzten oder abgeleiteten festgelegten Schlüsseln (210, 260), die auf dem ersten Elektrowerkzeug (120) gespeichert sind, oder gemeinsam genutzten oder abgeleiteten festgelegten Schlüsseln (210, 260), die auf einem zweiten Elektrowerkzeug (120) gespeichert sind, wenn das erste Batteriepack (130) mit dem ersten oder dem zweiten Elektrowerkzeug (120) verbunden ist;
und/oder
Vergleichen der gemeinsam genutzten oder abgeleiteten festgelegten Schlüssel (210, 260), die auf dem ersten Ladegerät (140) gespeichert sind, mit gemeinsam genutzten oder abgeleiteten festgelegten Schlüsseln (210, 260), die auf einem zweiten Batteriepack (130) gespeichert sind, wenn das erste Ladegerät (140) mit dem zweiten Batteriepack (130) verbunden ist;
und/oder
Vergleichen der gemeinsam genutzten oder abgeleiteten festgelegten Schlüssel (210, 260), die auf dem ersten Elektrowerkzeug (120) gespeichert sind, mit den gemeinsam genutzten oder abgeleiteten festgelegten Schlüsseln (210, 260), die auf dem zweiten Batteriepack (130) gespeichert sind, wenn das erste Elektrowerkzeug (120) mit dem zweiten Batteriepack (130) verbunden ist;
und
Begrenzen und/oder Steuern der Verwendung und/oder Zusammenarbeit von einem von dem ersten und dem zweiten Batteriepack (130), dem ersten und dem zweiten Ladegerät (140) und dem ersten und dem zweiten Elektrowerkzeug (120) basierend auf den Ergebnissen eines der Vergleiche.

12. Verfahren nach Anspruch 10, ferner umfassend die folgenden Schritte:
Vergleichen der Anfangsschlüssel (230), die auf dem ersten Batteriepack (130) gespeichert sind, mit den Anfangsschlüsseln (230), die auf dem ersten Ladegerät (140) gespeichert sind, oder Anfangsschlüsseln (230), die auf einem zweiten Ladegerät (140) gespeichert sind, wenn das erste Batteriepack (130) mit dem ersten oder dem zweiten Ladegerät (140) verbunden ist;
und/oder
Vergleichen der Anfangsschlüssel (230), die auf dem ersten Batteriepack (130) gespeichert sind, mit den Anfangsschlüsseln (230), die auf dem ersten Elektrowerkzeug (120) gespeichert sind, oder Anfangsschlüsseln (230), die auf einem zweiten Elektrowerkzeug (120) gespeichert sind, wenn das erste Batteriepack (130) mit dem ersten oder dem zweiten Elektrowerkzeug (120) verbunden ist;
und/oder
Vergleichen der Anfangsschlüssel (230), die auf dem ersten Ladegerät (140) gespeichert sind, mit Anfangsschlüsseln (230), die auf einem zweiten Batteriepack (130) gespeichert sind, wenn das erste Ladegerät (140) mit dem zweiten Batteriepack (130) verbunden ist;
und/oder
Vergleichen der Anfangsschlüssel (230), die auf dem ersten Elektrowerkzeug (120) gespeichert sind, mit den Anfangsschlüsseln (230), die auf dem zweiten Batteriepack (130) gespeichert sind, wenn das erste Elektrowerkzeug (120) mit dem zweiten Batteriepack (130) verbunden ist;
und
Begrenzen und/oder Steuern der Verwendung und/oder Zusammenarbeit von einem von dem ersten und dem zweiten Batteriepack (130), dem ersten und dem zweiten Ladegerät (140) und dem ersten und dem zweiten Elektrowerkzeug (120) basierend auf den Ergebnissen eines der Vergleiche der Anfangsschlüssel (230).

13. Verfahren nach Anspruch 11, wobei das Begrenzen und/oder Steuern der Verwendung und/oder Zusammenarbeit Folgendes umfasst:
eine Betriebsverweigerung, die das Nichtladen des ersten oder zweiten Batteriepacks (130) durch das erste oder zweite Ladegerät (140) und/oder das Nichtbereitstellen von Strom für das erste oder zweite Elektrowerkzeug (120) durch das erste oder zweite Batteriepack (130) beinhaltet;
und/oder
Begrenzen des Ladens des ersten oder zweiten Batteriepacks (130) durch das erste oder zweite Ladegerät (140) auf eine vordefinierte Anzahl von Ladevorgängen oder
einen vordefinierten Ladezustand;
und/oder
Bereitstellen von Strom für das erste oder zweite Elektrowerkzeug (120) durch das erste oder zweite Batteriepack (130) bis zu einem vordefinierten Zeitraum oder einer vordefinierten Anzahl von Operationen.

14. Verfahren nach Anspruch 9, wobei das Bereitstellen des gemeinsam genutzten Schlüssels (180) oder des festgelegten Parameters (220, 250) von dem Backend (170) zu dem ersten Ladegerät (140), von dem ersten Ladegerät (140) zu dem ersten Batteriepack (130) und/oder von dem ersten Batteriepack (130) zu dem ersten Elektrowerkzeug (120) einen kryptografischen Schutz zum Signieren des gemeinsam genutzten Schlüssels (180) oder des festgelegten Parameters (220, 250) mit einem privaten Schlüssel verwendet.

15. Verfahren nach Anspruch 9 unter Verwendung des Elektrowerkzeugsystems (100) nach Anspruch.

## Revendications

1. Système d'outil électrique (100) comprenant :
un outil électrique sans fil (120) avec un dispositif de commande d'outil électrique et une mémoire d'outil électrique ;
un bloc-batterie interchangeable (130) pour l'outil électrique (120) comprenant :
un chargeur (140) ;
un dispositif de commande de bloc-batterie et une mémoire de bloc-batterie,
une première interface de communication pour communiquer avec l'outil électrique (120) ; et
une deuxième interface de communication pour communiquer avec le chargeur (140) ; le chargeur comprenant un dispositif de commande de chargeur (142) et une mémoire de chargeur (142) ;
le chargeur (140) étant configuré pour stocker dans la mémoire de chargeur (142) une clé partagée (180) ou pour stocker un paramètre de réglage (220, 250) et dériver une clé de réglage (210, 260) par le dispositif de commande de chargeur (142) à partir du paramètre de réglage (220, 250) ;
le système d'outil électrique (100) étant **caractérisé en ce que**
le bloc-batterie (130) est configuré pour recevoir la clé partagée (180) ou le paramètre de réglage (220, 250) par l'intermédiaire de la deuxième interface de communication en provenance du chargeur (140) et pour stocker la clé partagée (180) ou pour stocker le paramètre de réglage (220, 250) et dériver la clé de réglage (210, 260) par le dispositif de commande de bloc-batterie à partir du paramètre de réglage (220, 250) ; et
l'outil électrique (120) étant configuré pour recevoir la clé partagée (180) ou le paramètre de réglage (220, 250) par l'intermédiaire de la première interface de communication en provenance du bloc-batterie (130) et pour stocker la clé partagée (180) ou pour stocker la clé de réglage (210, 260) dérivée par le dispositif de commande d'outil électrique à partir du paramètre de réglage (220, 250) et/ou pour stocker le paramètre de réglage (220, 250) dans la mémoire d'outil électrique et dériver la clé de réglage (210, 260) par le dispositif de commande d'outil électrique à partir du paramètre de réglage (220, 250).

2. Système d'outil électrique (100) selon la revendication 1, le bloc-batterie (130) étant configuré pour transférer des données du chargeur (140) à l'outil électrique (120) et/ou de l'outil électrique (120) au chargeur (140), en recevant des données par l'intermédiaire de la première et/ou de la deuxième interface de communication, en stockant les données dans la mémoire du bloc-batterie, et en envoyant les données par l'intermédiaire de la première et/ou de la deuxième interface de communication.

3. Système d'outil électrique (100) selon la revendication 1, le chargeur (140) étant configuré pour recevoir la clé partagée (180) ou le paramètre de réglage (220, 250) par l'intermédiaire d'une troisième interface de communication (141) en provenance d'un système dorsal (170) et/ou pour transférer les données par l'intermédiaire de la troisième interface de communication (141) du chargeur (140) vers le système dorsal (170) ou du système dorsal (170) vers le chargeur (140).

4. Système d'outil électrique (100) selon la revendication 3, le bloc-batterie (130) étant configuré pour requérir une connexion itérative par l'intermédiaire de la deuxième interface de communication au chargeur (140), tandis que le chargeur (140) est connecté au système dorsal (170) ou a été connecté au système dorsal (170) dans un laps de temps prédéfini, et/ou le chargeur (140) étant configuré pour requérir une connexion permanente ou itérative par l'intermédiaire de la troisième interface de communication (141) avec le système dorsal (170), la connexion se faisant après un nombre de cycles de charge prédéfini, un temps de charge prédéfini ou une période de temps prédéfinie.

5. Système d'outil électrique (100) selon la revendication 1,
le bloc-batterie (130) étant configuré pour :
comparer sa clé partagée (180) ou sa clé de réglage dérivée (210, 260) avec une clé partagée (180) ou une clé de réglage dérivée (210, 260) de tout outil électrique (120) auquel il est connecté et/ou de tout chargeur (140) auquel il est connecté ; et
commander, par le dispositif de commande de bloc-batterie, l'alimentation électrique de l'outil électrique (120) ou la charge du bloc-batterie (130) auquel il est connecté sur la base de la comparaison ;
et/ou
l'outil électrique (120) étant configuré pour :
comparer sa clé partagée (180) ou sa clé de réglage dérivée (210, 260) avec une clé partagée (180) ou une clé de réglage dérivée (210, 260) de tout bloc-batterie (130) auquel il est connecté ; et
commander, par le dispositif de commande d'outil électrique, le fonctionnement de l'outil électrique (120) sur la base de la comparaison ;
et/ou
le chargeur (140) étant configuré pour
comparer sa clé partagée (180) ou sa clé de réglage dérivée (210, 260) avec une clé partagée (180) ou une clé de réglage dérivée (210, 260) de tout bloc-batterie (130) auquel il est connecté et commander, par le dispositif de commande de chargeur (142), la charge du bloc-batterie (130) auquel il est connecté sur la base de la comparaison.

6. Système d'outil électrique (100) selon la revendication 1, la première interface de communication étant une interface de communication sans fil ou filaire et/ou la deuxième interface de communication étant une interface de communication sans fil ou filaire et/ou la troisième interface de communication (141) étant une interface de communication sans fil ou filaire.

7. Système d'outil électrique (100) selon la revendication 1, la première interface de communication et la deuxième interface de communication du bloc-batterie (130) étant réalisées comme une interface physique unique sans fil ou filaire configurée pour communiquer avec le chargeur (140) et l'outil électrique (120).

8. Système d'outil électrique (100) selon la revendication 1, le bloc-batterie (130) étant configuré pour communiquer par l'intermédiaire de la deuxième interface avec le chargeur (140) lorsque le bloc-batterie (130) n'est pas physiquement connecté au chargeur (140).

9. Procédé d'autorisation d'outils électriques (120), de blocs-batteries (130) et de chargeurs (140) dans un système d'outil électrique (100) comprenant un premier outil électrique (120), un premier bloc-batterie (130), un premier chargeur (140) et un système dorsal (170), comprenant les étapes de :
la fourniture d'une clé partagée (180) ou d'un paramètre de réglage (220, 250), pour dériver une clé de réglage (210, 260) par une fonction de dérivation de clé (240) à partir d'une clé initiale (230) et du paramètre de réglage (220, 250), par l'intermédiaire d'une connexion sans fil ou filaire depuis le système dorsal (170) vers le premier chargeur (140) ;
le procédé étant **caractérisé par**
la fourniture de la clé partagée (180) ou du paramètre de réglage (220, 250) par l'intermédiaire d'une connexion sans fil ou filaire depuis le premier chargeur (140) vers le premier bloc-batterie (130) et le stockage de la clé partagée (180) ou du paramètre de réglage (220, 250) sur le premier bloc-batterie (130) ; et
la fourniture de la clé partagée (180) ou du paramètre de réglage (220, 250) par l'intermédiaire d'une connexion sans fil ou filaire depuis le premier bloc-batterie (130) vers le premier outil électrique (120) et le stockage de la clé partagée (180) ou le stockage du paramètre de réglage (220, 250) et/ou de la clé de réglage dérivée (210, 260) sur le premier outil électrique (120).

10. Procédé selon la revendication 9, la dérivation de la clé de réglage (210, 260) par une fonction de dérivation de clé (240) utilisant une clé initiale (230) ou une clé initiale (230) dérivée de paires de clés publique/privée (400) stockées sur les outils électriques (120), les blocs-batteries (130) et les chargeurs (140) du système d'outil électrique (100) à partir desquelles la fonction de dérivation de clé (240), en particulier un code d'authentification de message basé sur un chiffrement (CMAC) ou une fonction de code d'authentification de message basé sur un hachage (HMAC), calcule la clé de réglage (210, 260) avec l'entrée supplémentaire du paramètre de réglage (220, 250).

11. Procédé selon la revendication 9, comprenant en outre les étapes de :
la comparaison des clés partagées ou des clés de réglage dérivées (210, 260) stockées sur le premier bloc-batterie (130) avec les clés partagées ou les clés de réglage dérivées (210, 260) stockées sur le premier chargeur (140) ou des clés partagées ou des clés de réglage dérivées (210, 260) stockées sur un deuxième chargeur (140) lorsque le premier bloc-batterie (130) est connecté au premier ou au deuxième chargeur (140) ;
et/ou
la comparaison des clés partagées ou des clés de réglage dérivées (210, 260) stockées sur le premier bloc-batterie (130) avec les clés partagées ou les clés de réglage dérivées (210, 260) stockées sur le premier outil électrique (120) ou des clés partagées ou des clés de réglage dérivées (210, 260) stockées sur un deuxième outil électrique (120) lorsque le premier bloc-batterie (130) est connecté au premier ou au deuxième outil électrique (120) ;
et/ou
la comparaison des clés partagées ou des clés de réglage dérivées (210, 260) stockées sur le premier chargeur (140) avec des clés partagées ou des clés de réglage dérivées (210, 260) stockées sur un deuxième bloc-batterie (130) lorsque le premier chargeur (140) est connecté au deuxième bloc-batterie (130) ;
et/ou
la comparaison des clés partagées ou des clés de réglage dérivées (210, 260) stockées sur le premier outil électrique (120) avec les clés partagées ou les clés de réglage dérivées (210, 260) stockées sur le deuxième bloc-batterie (130) lorsque le premier outil électrique (120) est connecté au deuxième bloc-batterie (130) ;
et
la limitation et/ou la commande de l'utilisation et/ou de la collaboration de l'un quelconque des premier et deuxième blocs-batteries (130), des premier et deuxième chargeurs (140) et des premier et deuxième outils électriques (120) sur la base des résultats de l'une quelconque des comparaisons.

12. Procédé selon la revendication 10, comprenant en outre les étapes de :
la comparaison des clés initiales (230) stockées sur le premier bloc-batterie (130) avec les clés initiales (230) stockées sur le premier chargeur (140) ou les clés initiales (230) stockées sur un deuxième chargeur (140) lorsque le premier bloc-batterie (130) est connecté au premier ou au deuxième chargeur (140) ;
et/ou
la comparaison des clés initiales (230) stockées sur le premier bloc-batterie (130) avec les clés initiales (230) stockées sur le premier outil électrique (120) ou les clés initiales (230) stockées sur un deuxième outil électrique (120) lorsque le premier bloc-batterie (130) est connecté au premier ou au deuxième outil électrique (120) ;
et/ou
la comparaison des clés initiales (230) stockées sur le premier chargeur (140) avec des clés initiales (230) stockées sur un deuxième bloc-batterie (130) lorsque le premier chargeur (140) est connecté au deuxième bloc-batterie (130) ;
et/ou
la comparaison des clés initiales (230) stockées sur le premier outil électrique (120) avec les clés initiales (230) stockées sur le deuxième bloc-batterie (130) lorsque le premier outil électrique (120) est connecté avec le deuxième bloc-batterie (130) ;
et
la limitation et/ou la commande de l'utilisation et/ou de la collaboration de l'un quelconque des premier et deuxième blocs-batteries (130), des premier et deuxième chargeurs (140) et des premier et deuxième outils électriques (120) sur la base des résultats de l'une quelconque des comparaisons des clés initiales (230).

13. Procédé selon la revendication 11, la limitation et/ou la commande de l'utilisation et/ou de la collaboration comprenant :
un refus de fonctionnement incluant la non-charge du premier ou deuxième bloc-batterie (130) par le premier ou deuxième chargeur (140) et/ou la non-fourniture d'énergie au premier ou deuxième outil électrique (120) par le premier ou deuxième bloc-batterie (130) ;
et/ou
la limitation de la charge du premier ou deuxième bloc-batterie (130) par le premier ou deuxième chargeur (140) à un nombre prédéfini de charges ou un niveau de charge prédéfini ;
et/ou
la fourniture d'énergie au premier ou au deuxième outil électrique (120) par le premier ou le deuxième bloc-batterie (130) jusqu'à une période de temps prédéfinie ou un nombre prédéfini d'opérations.

14. Procédé selon la revendication 9, la fourniture de la clé partagée (180) ou du paramètre de réglage (220, 250) depuis le système dorsal (170) vers le premier chargeur (140), depuis le premier chargeur (140) vers le premier bloc-batterie (130) et/ou depuis le premier bloc-batterie (130) vers le premier outil électrique (120) utilisant une protection de chiffrement de signature de la clé partagée (180) ou du paramètre de réglage (220, 250) avec une clé privée.

15. Procédé selon la revendication 9, utilisant le système d'outil électrique (100) selon la revendication.
